# EUROPEAN PATENT APPLICATION

(11) **EP 1 592 277 A2**
(43) Date of publication of application: **02.11.2005**
(21) Application number: 05009469.7
(22) Date of filing: 29.04.2005
(51) Int. Cl.: H04Q 7/38

(54) **Method and system for managing provider service availability in a wireless network**

(30) Priority: 30.04.2004 US 836885
(71) Applicant: SAMSUNG ELECTRONICS CO., LTD., Suwon-city, Gyeonggi-do (KR)
(72) Inventor: Kincaid, Jason Reid, Dallas Texas 75243 (US)
(74) Representative: Grünecker, Kinkeldey, Stockmair & Schwanhäusser Anwaltssozietät

(57) **Abstract**

A method for managing provider service availability in a wireless network that comprises one or more blackout zones is provided that includes receiving a request for a provider service from a wireless communication device. A determination is made regarding whether the wireless communication device is within one of the blackout zones for the provider service. The requested provider service is disabled for the wireless communication device when the wireless communication device is within one of the blackout zones.

## Description

The present invention is directed in general to wireless telecommunications networks and, more specifically, to a method and system for managing provider service availability in a wireless network.

The use of cellular telephones and wireless networks has become increasingly widespread. As the use of cellular telephones increases, it has become increasingly important to be able to determine the location of cellular telephones within a cellular telephone wireless network. For example, when a caller calls an emergency number such as 911, it is important to be able to determine where the cellular telephone is located when the call is made. Because of this, the Federal Communications Commission (FCC) has recently issued regulations that require operators of cellular telephone networks to be able to locate a cellular telephone within a wireless network. Therefore, locating technology for cellular telephones has become an important issue for wireless networks, resulting in more attention and resources being dedicated to its development.

In addition to this, the number of provider services available from wireless network providers to users of cellular telephones has been increasing. For example, many cellular telephones now include a camera function that allows the users to take and send digital images with their cellular telephones. This particular feature has caused concem with respect to privacy and security issues. For example, businesses have become concerned about the opportunity for intellectual property theft and other forms of corporate espionage that may be more easily accomplished through the surreptitious use of a camera on a cellular telephone. In addition, many individuals are concerned about their own privacy with respect to these inconspicuous types of cameras.

It is the object of the present invention to provide a method and system for managing provider service availability in a wireless network that substantially eliminate or reduce disadvantages and problems associated with conventional methods and systems.

This object is solved by the subject matter of the independent claims.

Preferred embodiments are defined in the dependent claims.

According to one embodiment of the present invention, a method for managing provider service availability in a wireless network that comprises one or more blackout zones is provided. The method includes receiving a request for a provider service from a wireless communication device. A determination is made regarding whether the wireless communication device is within one of the blackout zones for the provider service. The requested provider service is disabled for the wireless communication device when the wireless communication device is within one of the blackout zones.

According to another embodiment of the present invention, a system operable to manage provider service availability in a wireless network that comprises one or more blackout zones is provided that includes a blackout database and a blackout server. The blackout database is operable to store blackout data for the wireless network. The blackout server is coupled to the blackout database. The blackout server is operable to receive a request for a provider service from a wireless communication device, to determine whether the wireless communication device is within one of the blackout zones for the provider service based on the blackout data stored in the blackout database, and to disable the requested provider service for the wireless communication device when the wireless communication device is within one of the blackout zones.

According to yet another embodiment of the present invention, a wireless communication device is provided that includes a local blackout database and a blackout controller. The local blackout database is operable to store blackout data for the wireless network. The blackout controller is operable to receive a request for a provider service from the wireless communication device, to determine whether the wireless communication device is within one of the blackout zones for the provider service based on the blackout data stored in the local blackout database, and to disable the requested provider service for the wireless communication device when the wireless communication device is within one of the blackout zones.

Technical advantages of one or more embodiments of the present invention include providing a method for managing provider service availability for wireless devices in a wireless network. In a particular embodiment, one or more provider services, such as a camera service, may be disabled based on the location of the wireless device requesting the service. As a result, location-specific privacy and security issues may be addressed without affecting the availability of such services in non-sensitive locations.

Other technical advantages will be readily apparent to one skilled in the art from the following figures, description, and claims.

Before providing the details of the invention below, it may be advantageous to set forth definitions of certain words or phrases used throughout this patent document: the terms "include" and "comprise," as well as derivatives thereof, mean inclusion without limitation; the term "or" is inclusive, meaning and/or, the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior uses, as well as to future uses of such defined words and phrases.

For a more complete understanding of the present invention and its advantages, reference is now made to the following description taken in conjunction with the accompanying drawings, in which like reference numerals represent like parts:
FIGURE 1 is a block diagram illustrating a general overview of a wireless network that is operable to manage provider service availability in accordance with one embodiment of the present invention;
FIGURE 2 is a block diagram illustrating one of the wireless communication devices of FIGURE 1 in greater detail in accordance with one embodiment of the present invention;
FIGURES 3A-B are block diagrams illustrating possible contents of the blackout databases of FIGURES 1 and 2 in accordance with altemate embodiments of the present invention; and
FIGURE 4 is a flow diagram illustrating a method for managing provider service availability in the wireless network of FIGURE 1 in accordance with one embodiment of the present invention.

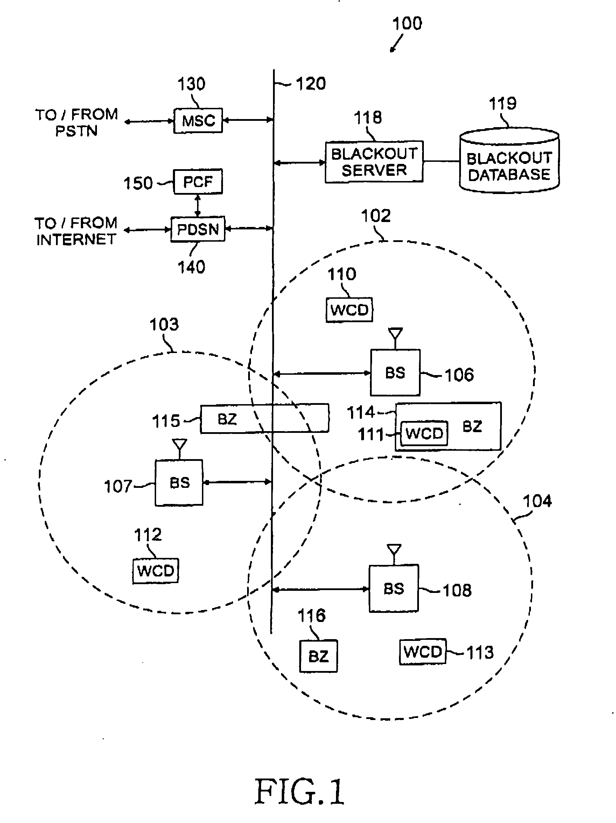

FIGURES 1 through 4, discussed below, and the various embodiments used to describe the principles of the present invention in this patent document are by way of illustration only and should not be construed in any way to limit the scope of the invention. Those skilled in the art will understand that the principles of the present invention may be implemented in any suitably arranged wireless network.

FIGURE 1 is a block diagram illustrating a general overview of a wireless network 100 that is operable to manage provider service availability in accordance with one embodiment of the present invention. The wireless network 100 comprises a plurality of cell sites 102-104, each of the cell sites 102-104 comprising a base station (BS) 106-108. As used herein, "each" means every one of at least a subset of the identified items.

Each base station 106-108 is operable to communicate with a plurality of wireless communication devices (WCD) 110-113. According to one embodiment, the base stations 106-108 are operable to communicate with the wireless communication devices 110-113 over code division multiple access (CDMA) channels according to the IS-2000-C standard (i.e., Release C of CDMA2000). Each of the wireless communication devices 110-113 may comprise a mobile wireless device, such as a cell phone, a PCS handset, a personal digital assistant (PDA) handset, a portable computer, a telemetry device, or the like, or any other suitable device operable to communicate with one of the base stations 106-108 via wireless links, including a stationary wireless device.

Each wireless communication device 110-113 is able to be located within the wireless network 100. For example, each wireless communication device 110-113 may be able to identify its own location, the base stations 106-108 may be able to locate each wireless communication device 110-113, or some wireless communication devices 110-113 may be able to identify their locations, while others may be located by the base stations 106-108. For another embodiment, instead of or in addition to the base stations 106-108, other suitable components of the wireless network 100 may be operable to locate the wireless communication devices 110-113. Locating the wireless communication devices 110-113 may be accomplished by using global positioning systems, triangulation and/or any other suitable locating process.

Dotted lines show the approximate boundaries of the cell sites 102-104 in which the base stations 106-108 are located. The cell sites 102-104 are shown approximately circular for the purposes of illustration and explanation only. It will be understood that the cell sites 102-104 may have other irregular shapes, depending on the cell configuration selected and natural and man-made obstructions.

The cell sites 102-104 comprise a plurality of sectors (not shown), where a directional antenna coupled to the base station 106-108 may provide service for each sector. The embodiment of FIGURE 1 illustrates the base station 106-108 in the center of the cell site 102-104. In an altemate embodiment, the directional antennas may be positioned in corners of the sectors or in any other suitable location. The system of the present invention is not limited to any particular cell site configuration.

The cell sites 102-104 may also comprise one or more blackout zones (BZ) 114-116 in which provider services may be disabled, as described in more detail below. As illustrated in FIGURE 1, a blackout zone may exist within one cell site 102-104, such as blackout zones 114 and 116, or within multiple cell sites 102-104, such as blackout zone 115. In addition, the blackout zones 114-116 are shown approximately rectangular for the purposes of illustration only. It will be understood that the blackout zones 114-116 may have irregular or other shapes without departing from the scope of the present invention.

The wireless network 100 also comprises a blackout server 118 and a blackout database 119, which is coupled to the blackout server 118. The blackout server 118 is operable to manage provider service availability in the wireless network 100. For example, according to one embodiment, the blackout server 118 is operable to manage camera service availability by either enabling or disabling a camera function for wireless communication devices 110-113 within the wireless network 100 based on the locations of the wireless communication devices 110-113. In addition, according to one embodiment, one or more provider services may be disabled by default when access to the blackout server 118 is unavailable.

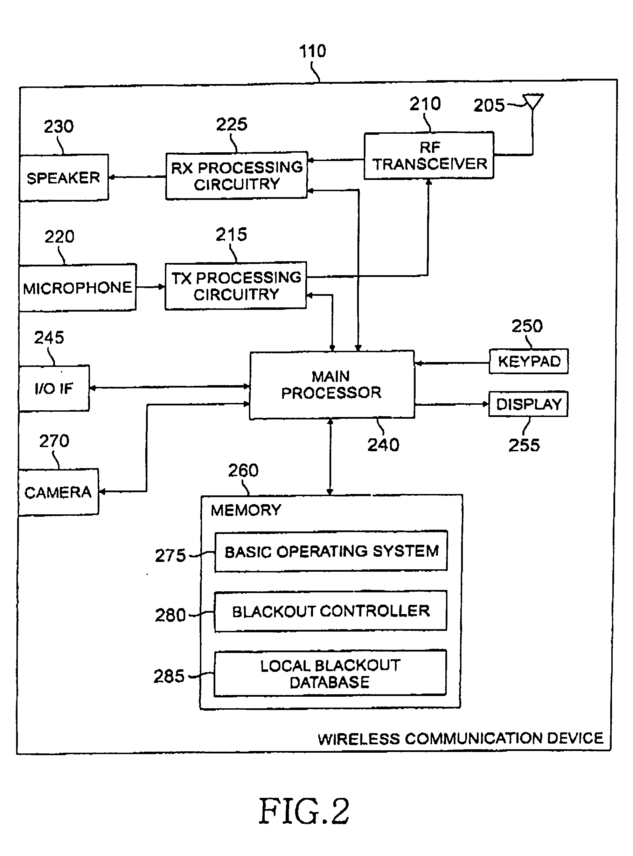

The blackout server 118 may manage provider service availability either directly or indirectly, by providing support for the wireless communication devices 110-113. For this indirect embodiment, described in more detail below in connection with FIGURE 2, the wireless communication devices 110-113 are operable to manage provider service availability based on data provided by the blackout server 118 and stored in the wireless communication devices 110-113.

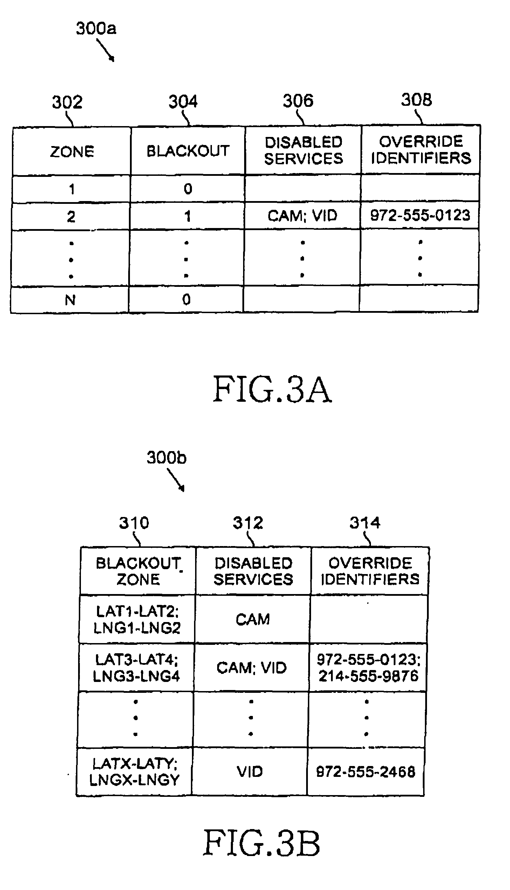

The blackout database 119 comprises any suitable data store that is operable to store blackout data for the blackout server 118. As described in more detail below in connection with FIGURES 3A-B, the blackout data may comprise data that identifies the blackout zones 114-116, data that identifies disabled services, data that identifies wireless communication devices 110-113 that have override privileges and/or any other suitable data useful to the blackout server 118.

The blackout server 118 may comprise one or more servers and the blackout database 119 may comprise one or more databases. In addition, it will be understood that the blackout server 118 and the blackout database 119 may be implemented elsewhere within the wireless network 100, such as within the base stations 106-108 or any other suitable location, without departing from the scope of the present invention.

For one embodiment, the blackout server 118 may comprise logic encoded in media. The logic comprises functional instructions for carrying out program tasks. The media comprises computer disks or other computer-readable media, application-specific integrated circuits (ASICs), field-programmable gate arrays (FPGAs), digital signal processors (DSPs), other suitable specific or general purpose processors, transmission media or other suitable media in which logic may be encoded and utilized.

Each base station 106-108 may comprise a base station controller and at least one base transceiver subsystem. The base station controllers are operable to manage wireless communications resources, including the base transceiver subsystems, for specified cells 102-104 within the wireless network 100. The base transceiver subsystems comprise the radiofrequency (RF) transceivers, antennas, and other electrical equipment located in each cell site 102-104. This equipment may include air conditioning units, heating units, electrical supplies, telephone line interfaces and RF transmitters and RF receivers.

The base stations 106-108 are operable to transfer voice and data signals between each other and the public switched telephone network (PSTN) (not shown) via communication line 120 and a mobile switching center (MSC) 130. The base stations 106-108 are also operable to transfer data signals, such as packet data, back and forth from the Internet (not shown) via communication line 120 and a packet data server node (PDSN) 140. The packet control function (PCF) unit 150 may be operable to control the flow of data packets between base stations 106-108 and the PDSN 140. The PCF unit 150 may be implemented as part of the PDSN 140, as part of the base stations 106-108, or as a stand-alone device that communicates with the PDSN 140, as shown in FIGURE 1. Communication line 120 is also operable to establish connections for voice and data circuits between the MSC 130 and the base stations 106-108 and connections for managing provider service availability between the blackout server 118 and the wireless communication devices 110-113 by way of the base stations 106-108.

The communication line 120 may be any suitable connection means, including a T1 line, a T3 line, a fiber optic link, or any other type of data connection. The connections on line 120 may transmit analog voice signals or digital voice signals in pulse code modulated (PCM) format, Intemet Protocol (IP) format, asynchronous transfer mode (ATM) format, or the like. According to an advantageous embodiment of the present invention, line 120 also provides an IP connection that transfers data packets between the base stations 106-108 of the wireless network 100. Thus, line 120 may comprise a local area network that is operable to provide direct IP connections between base stations 106-108 without using the PDSN 140.

The MSC 130 comprises a switching device that is operable to provide services and coordination between the subscribers in the wireless network 100 and external networks, such as the PSTN or internet, In some embodiments of the present invention, communications line 120 may be several different data links, where each data link couples one of the base stations 106-108 to the MSC 130.

In the embodiment of the wireless network 100 shown in FIGURE 1, wireless communication device 110 and wireless communication device 111 are located in cell site 102 and are operable to communicate with base station 106. Wireless communication device 112 is located in cell site 103 and is operable to communicate with base station 107, and wireless communication device 113 is located in cell site 104 and is operable to communicate with base station 108.

FIGURE 2 is a block diagram illustrating one of the wireless communication devices 110-113 in greater detail in accordance with one embodiment of the present invention. The wireless communication device 110 is illustrated as an example. However, it will be understood that the components illustrated and described with respect to the wireless communication device 110 are also part of the wireless communication devices 111-113.

According to the illustrated embodiment, the wireless communication device 110 comprises an antenna 205, a radiofrequency (RF) transceiver 210, transmit (TX) processing circuitry 215, a microphone 220, receive (RX) processing circuitry 225, and a speaker 230. The wireless communication device 110 also comprises a main processor 240, an input/output (I/O) interface (IF) 245, a keypad 250, a display 255, and a memory 260. According to one embodiment, the wireless communication device 110 also comprises a camera 270.

The RF transceiver 210 is operable to receive from the antenna 205 an incoming RF signal transmitted by one of the base stations 106-108 of the wireless network 100. The RF transceiver 210 is also operable to down-convert the incoming RF signal to produce an intermediate frequency (IF) or a baseband signal. The IF or baseband signal may be sent to the receiver processing circuitry 225, which is operable to produce a processed baseband signal by filtering, decoding, and/or digitizing the baseband or IF signal. The receiver processing circuitry 225 is also operable to transmit the processed baseband signal to the speaker 230 (e.g., when the processed baseband signal comprises voice data) or to the main processor 240 for further processing (e.g., when the processed baseband signal relates to web browsing).

The transmitter processing circuitry 215 is operable to receive analog or digital voice data from the microphone 220 or other outgoing baseband data (e.g., web data, e-mail, interactive video game data and the like) from the main processor 240. The transmitter processing circuitry 215 is also operable to encode, multiplex and/or digitize the outgoing baseband data to produce a processed baseband or IF signal. The RF transceiver 210 is operable to receive the outgoing processed baseband or IF signal from the transmitter processing circuitry 215. The RF transceiver 210 is also operable to up-convert the baseband or IF signal to a radiofrequency signal that may be transmitted via the antenna 205.

According to one embodiment, the main processor 240 comprises a microprocessor or microcontroller. The memory 260, which is coupled to the main processor 240, may comprise a random access memory (RAM) and/or a read-only memory (ROM). The main processor 240 is operable to execute a basic operating system program 275 stored in the memory 260 in order to control the overall operation of the wireless communication device 110.

In one such operation, the main processor 240 controls the reception of forward channel signals and the transmission of reverse channel signals by the RF transceiver 210, the receiver processing circuitry 225, and the transmitter processing circuitry 215. The main processor 240 is also operable to execute other processes and programs resident in the memory 260. The main processor 240 may move data into or out of the memory 260, as required by an executing process.

The main processor 240 is also coupled to the I/O interface 245. The I/O interface 245 is operable to provide the wireless communication device 110 with the ability to connect to other devices, such as laptop computers, handheld computers and the like. The I/O interface 245 provides a communication path between these accessories and the main controller 240.

The main processor 240 is also coupled to the keypad 250 and the display unit 255. The operator of the wireless communication device 110 may use the keypad 250 to enter data into the wireless communication device 110. The display 255 may comprise a liquid crystal display capable of rendering text and/or graphics from websites. It will be understood that additional embodiments may use other types of displays.

The main processor 240 is also coupled to the camera 270. The camera 270 is operable to capture digital images and provide them to the main processor 240 for additional processing, such as storing in the memory 260, transmitting over the antenna 205 through the transmitter processing circuitry 215 and RF transceiver 210 and/or any other suitable processing. As described in more detail below, the camera 270 may be disabled when the wireless communication device 110 is within one of the blackout zones 114-116.

In accordance with one embodiment of the present invention, the memory 260 may comprise a blackout controller program 280 and a local blackout database 285. As described above, for this embodiment, the blackout controller 280 is operable to manage provider service availability based on data provided by the blackout server 118 and stored in the local blackout database 285. For example, according to one embodiment, the blackout controller 280 is operable to manage camera service availability by either enabling or disabling the camera 270 for the wireless communication device 110 based on the location of the wireless communication device 110.

The local blackout database 285 is operable to store blackout data received from the blackout server 118 for the blackout controller 280. As described in more detail below in connection with FIGURES 3A-B, the blackout data may comprise data that identifies the blackout zones 114-116, data that identifies disabled services, data that identifies whether or not the wireless communication device 110 has override privileges and/or any other suitable data useful to the blackout controller 280. For one embodiment, the local blackout database 285 may store a copy of the blackout data stored in the blackout database 119. For another embodiment, the local blackout database 285 may store a portion of the blackout data stored in the blackout database 119 based on the coverage area in which the wireless communication device 110 is communicating and/or any other suitable criteria.

FIGURES 3A-B are block diagrams illustrating possible contents of the blackout database 119 and/or the local blackout database 285 in accordance with altemate embodiments of the present invention. Although illustrated as tables 300, it will be understood that the contents of the blackout database 119 and/or the local blackout database 285 may be stored in any suitable format without departing from the scope of the present invention.

FIGURE 3A is a blackout table 300a that comprises a zone column 302, a blackout column 304, an optional disabled services column 306, and an optional override identifier column 308. The zone column 302 is operable to identify a plurality of zones that make up one or more cell sites 102-104 or any other predefined region of the wireless network 100. The blackout column 304 is operable to identify which of the zones identified in the corresponding zone column 302 are blackout zones 114-116. For one embodiment, a value of 1 in the blackout column 304 identifies a blackout zone 114-116 and a value of 0 in the blackout column 304 identifies a zone that is not a blackout zone 114-116. For this embodiment, the blackout server 118 or the blackout controller 280 may identify a blackout zone 114-116 by searching the blackout table 300a for a specific zone in the zone column 302 and then reading the data in the corresponding blackout column 304.

Although the illustrated embodiment identifies the zones in the zone column 302 with incremental numerical values, it will be understood that the zone column 302 may identify the zones in any suitable manner without departing from the scope of the present invention. In addition, although the illustrated embodiment identifies the blackout zones 114-116 in the blackout column 304 with a value of 1, it will be understood that the blackout column 304 may identify the blackout zones 114-116 with a value of 0 or in any other suitable manner without departing from the scope of the present invention.

The optional disabled services column 306 is operable to identify one or more provider services that may be disabled within the blackout zone 114-116 identified by the corresponding location in the zone column 302. Thus, the disabled services column 306 may be provided as part of the blackout table 300a for the embodiment in which more than one provider service may be disabled. For example, in addition to a camera service, a video service and/or any other suitable provider service may also be disabled. However, for the embodiment in which only one provider service may be disabled, the optional disabled services column 306 may be omitted.

The optional override identifier column 308 is operable to identify zero, one or more wireless communication devices 110-113 that have override privileges such that the identified wireless communication devices 110-113 may continue to use the provider services identified in the disabled services column 306 (or the single provider service that may be disabled when the disabled services column 306 is omitted) in the blackout zone 114-116 identified by the corresponding location in the zone column 302. For an embodiment in which no wireless communication devices 110-113 will be granted override privileges, the optional override identifier column 308 may be omitted.

Although the illustrated embodiment identifies the disabled services in the disabled services column 306 with textual identifiers, it will be understood that the disabled services column 306 may identify the disabled services in any suitable manner without departing from the scope of the present invention. In addition, although the illustrated embodiment identifies the wireless communication devices 110-113 that have override privileges in the override identifier column 308 with telephone numbers, it will be understood that the override identifier column 308 may identify the wireless communication devices 110-113 that have override privileges in any suitable manner without departing from the scope of the present invention. For example, for the embodiment in which the wireless communication devices 110-113 are operable to manage provider service availability, the identifier stored in the override identifier column 308 may comprise a '1' or a '0,' a 'yes' or a 'no,' an 'off or an 'on,' or any other suitable identifier that is operable to identify the corresponding wireless communication device 110-113 as having override privileges or not.

FIGURE 3B is a blackout table 300b that comprises a blackout zone column 310, an optional disabled services column 312, and an optional override identifier column 314. The blackout zone column 310 is operable to identify one or more blackout zones 114-116 by location. According to one embodiment, the locations provided in the blackout zone column 310 may comprise a range of latitude and longitude data that form the boundaries of the blackout zones 114-116. However, it will be understood that the locations provided in the blackout zone column 310 may comprise any other suitable information capable of identifying the geographic location of each blackout zone 114-116.

Thus, for this embodiment, the blackout server 118 or the blackout controller 280 may identify a blackout zone 114-116 by searching the blackout table 300b for a specific location that may be stored in the blackout zone column 310. If the location is found in the blackout zone column 310, the location is part of a blackout zone 114-116. For the embodiment in which the blackout zone column 310 comprises ranges of latitude and longitude data, the blackout server 118 or the blackout controller 280 may compare the specific location to the ranges stored in the blackout zone column 310 to determine whether or not the specific location is within any of the stored ranges.

The optional disabled services column 312 is operable to identify one or more provider services that may be disabled within the blackout zone 114-116 identified by the corresponding location in the blackout zone column 310. Thus, the disabled services column 312 may be provided as part of the blackout table 300b for the embodiment in which more than one provider service may be disabled. For example, in addition to a camera service, a video service and/or any other suitable provider service may also be disabled. However, for the embodiment in which only one provider service may be disabled, the optional disabled services column 312 may be omitted.

The optional override identifier column 314 is operable to identify zero, one or more wireless communication devices 110-113 that have override privileges such that the identified wireless communication devices 110-113 may continue to use the provider services identified in the disabled services column 312 (or the single provider service that may be disabled when the disabled services column 312 is omitted) in the blackout zone 114-116 identified by the corresponding location in the blackout zone column 310. For an embodiment in which no wireless communication devices 110-113 will be granted override privileges, the optional override identifier column 314 may be omitted.

Although the illustrated embodiment identifies the disabled services in the disabled services column 312 with textual identifiers, it will be understood that the disabled services column 312 may identify the disabled services in any suitable manner without departing from the scope of the present invention. In addition, although the illustrated embodiment identifies the wireless communication devices 110-113 that have override privileges in the override identifier column 314 with telephone numbers, it will be understood that the override identifier column 314 may identify the wireless communication devices 110-113 that have override privileges in any suitable manner without departing from the scope of the present invention. For example, for the embodiment in which the wireless communication devices 110-113 are operable to manage provider service availability, the identifier stored in the override identifier column 314 may comprise a '1' or a '0,' a 'yes' or a 'no,' an 'off or an 'on,' or any other suitable identifier that is operable to identify the corresponding wireless communication device 110-113 as having override privileges or not.

In accordance with an alternative embodiment, the blackout data stored in the blackout database 119 or the local blackout database 285 may be operable to identify one or more wireless communication devices 110-113 as having override privileges for one or more services while not having override privileges for one or more other services in a single blackout zone 114-116. Thus, for example, one wireless communication device 110-113 may be granted override privileges with respect to a first provider service in a particular blackout zone 114-116 but not be granted override privileges with respect to a second and third provider service in the same blackout zone 114-116. This may be accomplished by providing an additional row of data for each disabled service in either of the tables 300a-b or in any other suitable manner.

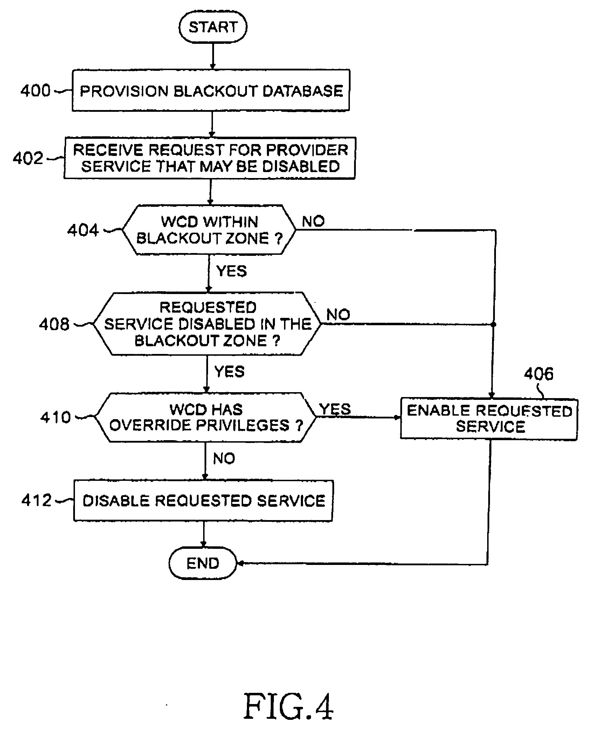

FIGURE 4 is a flow diagram illustrating a method for managing provider service availability in the wireless network 100 in accordance with one embodiment of the present invention. The method begins at step 400 where the blackout database 119 and, optionally, the local blackout database 285 is provisioned. For example, according to one embodiment, the blackout databases 119 and 285 may be provisioned by storing blackout data in a blackout table, such as blackout table 300a or 300b. In addition, it will be understood that the blackout database 119 may be updated and maintained in any suitable manner to ensure that the appropriate blackout data is stored in the blackout database 119. Similarly, the local blackout database 285, if implemented, may be updated by the blackout server 118 periodically, when the wireless communication device 110-113 moves into a new coverage area, based on changes to the blackout database 119, or based on any other suitable criteria to ensure that the appropriate blackout data is stored in the local blackout database 285.

At step 402, the blackout server 118 (or the blackout controller 280 for the embodiment in which the wireless communication devices 110-113 are operable to manage provider service availability) receives a request for a provider service that may be disabled, which may be identified by the blackout server 118 by accessing the blackout database 119 or by the blackout controller 280 by accessing the local blackout database 285.

At decisional step 404, the blackout server 118 or the blackout controller 280 makes a determination regarding whether or not the wireless communication device 110-113 that requested the provider service is within a blackout zone 114-116 based on the blackout data stored in the blackout database 119 or the local blackout database 285. The location of the wireless communication device 110-113 may be determined at the time of the request. Alternatively, the wireless communication device 110-113 may periodically provide its location to the blackout server 118, the blackout server 118 may periodically poll the wireless communication device 110-113 to determine its location, or the location may be determined in any other suitable manner.

If the wireless communication device 110-113 is not within a blackout zone 114-116, the method follows the No branch from decisional step 404 to step 406. At step 406, the blackout server 118 or the blackout controller 280 enables the requested service for the wireless communication device 110-113, at which point the method comes to an end.

Returning to decisional step 404, if the blackout server 118 or the blackout controller 280 determines that the wireless communication device 110-113 is within a blackout zone 114-116, the method may follow the Yes branch from decisional step 404 to optional, decisional step 408.

At decisional step 408, the blackout server 118 or the blackout controller 280 makes a determination regarding whether or not the requested provider service should be disabled in the blackout zone 114-116 in which the wireless communication device 110-113 is communicating. Thus, for the embodiment in which more than one provider service may be disabled, the blackout server 118 or the blackout controller 280 determines whether or not the requested service is one of the services that should be disabled in that particular blackout zone 114-116.

If the requested service is not a service that should be disabled for that particular blackout zone 114-116, the method follows the No branch from decisional step 408 to step 406, where the blackout server 118 or the blackout controller 280 enables the requested service for the wireless communication device 110-113 and the method comes to an end.

Retuming to decisional step 408, if the blackout server 118 or the blackout controller 280 determines that the requested service is a service that should be disabled for that particular blackout zone 114-116, the method may follow the Yes branch from decisional step 408 to optional, decisional step 410.

At decisional step 410, the blackout server 118 or the blackout controller 280 makes a determination regarding whether or not the wireless communication device 110-113 that requested the service has override privileges for that service. Thus, for the embodiment in which one or more wireless communication devices 110-113 may be granted override privileges, the blackout server 118 or the blackout controller 280 determines whether or not the requesting wireless communication device 110-113 is one that has override privileges for the requested service in the corresponding blackout zone 114-116.

If the wireless communication device 110-113 that requested the service does have override privileges, the method follows the Yes branch from decisional step 410 to step 406, where the blackout server 118 or the blackout controller 280 enables the requested service for the wireless communication device 110-113 and the method comes to an end.

Retuming to decisional step 410, if the blackout server 118 or the blackout controller 280 determines that the wireless communication device 110-113 that requested the service does not have override privileges, the method follows the No branch from decisional step 410 to step 412.

Because decisional steps 408 and 410 are optional, it will be understood that if either or both of these steps are omitted, the method follows the Yes branch from decisional step 404 to the included decisional step 408 or 410 or, when both are omitted, to step 412. At step 412, the blackout server 118 or the blackout controller 280 disables the requested service for the wireless communication device 110-113 and the method comes to an end.

In this way, the blackout server 118 or the blackout controller 280 may manage provider service availability for wireless communication devices 110-113 in the wireless network 100 by selectively disabling one or more provider services, such as a camera service, based on the location of the wireless communication device 110-113 that requested the service. Using this method, location-specific privacy and security issues may be addressed without affecting the availability of the provider services in non-sensitive locations.

Although the present invention has been described with several embodiments, various changes and modifications may be suggested to one skilled in the art. It is intended that the present invention encompass such changes and modifications as fall within the scope of the appended claims.

## Claims

1. A method for managing provider service availability in a wireless network that comprises one or more blackout zones, comprising:
receiving a request for a provider service from a wireless communication device;
determining whether the wireless communication device is within one of the blackout zones for the provider service; and
disabling the requested provider service for the wireless communication device when the wireless communication device is within one of the blackout zones.

2. The method of claim 1, further comprising determining whether the requested provider service should be disabled in the blackout zone.

3. The method of claim 1 or 2, the provider service comprising a camera service.

4. The method of one of claims 1 to 3, determining whether the wireless communication device is within one of the blackout zones comprising determining whether the wireless communication device is within one of the blackout zones based on blackout data stored in a blackout database.

5. The method of claim 4, further comprising provisioning the blackout database.

6. The method of claim 5, wherein the step of provisioning the blackout database comprises storing the blackout data in a blackout table in the blackout database.

7. The method of one of claims 1 to 6, further comprising enabling the requested provider service for the wireless communication device when the wireless communication device is not within one of the blackout zones.

8. The method of one of claims 1 to 7, further comprising:
determining whether the wireless communication device has override privileges in the blackout zone; and
disabling the requested provider service for the wireless communication device when the wireless communication device is within one of the blackout zones comprising disabling the requested provider service for the wireless communication device when the wireless communication device is within one of the blackout zones and the wireless communication device has no override privileges in the blackout zone.

9. A system operable to manage provider service availability in a wireless network that comprises one or more blackout zones, comprising:
a blackout database operable to store blackout data for the wireless network; and
a blackout server coupled to the blackout database, the blackout server operable to receive a request for a provider service from a wireless communication device, to determine whether the wireless communication device is within one of the blackout zones for the provider service based on the blackout data stored in the blackout database, and to disable the requested provider service for the wireless communication device when the wireless communication device is within one of the blackout zones.

10. The system of claim 9, the blackout server further operable to determine whether the requested provider service should be disabled in the blackout zone.

11. The system of claim 9, the blackout server further operable to access the blackout database to determine whether the requested provider service is disabled.

12. The system of one of claims 9 to 11, the blackout server further operable to determine whether the wireless communication device has override privileges in the blackout zone and to disable the requested provider service for the wireless communication device when the wireless communication device is within one of the blackout zones and the wireless communication device has no override privileges in the blackout zone.

13. The system of one of claims 9 to 12, the provider service comprising a camera service.

14. The system of claim 9, the blackout server further operable to enable the requested provider service for the wireless communication device when the wireless communication device is not within one of the blackout zones.

15. A wireless communication device, comprising:
a local blackout database operable to store blackout data for the wireless network; and
a blackout controller operable to receive a request for a provider service from the wireless communication device, to determine whether the wireless communication device is within one of the blackout zones for the provider service based on the blackout data stored in the local blackout database, and to disable the requested provider service for the wireless communication device when the wireless communication device is within one of the blackout zones.

16. The wireless communication device of claim 15, the blackout controller further operable to determine whether the requested provider service should be disabled in the blackout zone.

17. The wireless communication device of claim 15, the blackout controller further operable to access the local blackout database to determine whether the requested provider service may be disabled.

18. The wireless communication device of one of claims 15 to 17, the blackout controller further operable to determine whether the wireless communication device has override privileges in the blackout zone and to disable the requested provider service for the wireless communication device when the wireless communication device is within one of the blackout zones and the wireless communication device has no override privileges in the blackout zone.

19. The wireless communication device of one of claims 15 to 18, the provider service comprising a camera service.

20. The wireless communication device of one of claims 15 to 19, the blackout controller further operable to enable the requested provider service for the wireless communication device when the wireless communication device is not within one of the blackout zones.
